# FASCICULE DE BREVET EUROPEEN

(11) **EP 4 366 991 B1**
(45) Date de publication et mention de la délivrance du brevet: **30.07.2025**
(21) Numéro de dépôt: 22750855.3
(22) Date de dépôt: 30.06.2022
(51) Int. Cl.: B60T 8/00, B60T 13/74, F16D 55/226

(54) **DISPOSITIF POUR RELÂCHER RAPIDEMENT UN FREIN DE STATIONNEMENT ÉLECTRO-MÉCANIQUE**
VORRICHTUNG ZUM SCHNELLEN LÖSEN EINER ELEKTRO-MECHANISCHEN FESTSTELLBREMSE
DEVICE FOR QUICKLY RELEASING AN ELECTRO-MECHANICAL PARKING BRAKE

(30) Priorité: 08.07.2021 FR 2107424
(43) Date de publication de la demande: 15.05.2024
(73) Titulaire: Hitachi Astemo France, 93700 Drancy (FR); Hitachi Astemo Heilbronn GmbH, 74072 Heilbronn (DE)
(72) Inventeur: SASSO, Julien, 77420 CHAMPS SUR MARNE (FR); DEMANDRE, Maxime, 70469 STUTTGART (DE); WANG, Weiqiao, 75017 PARIS (FR); PATRAO CARQUEIJO, Alex, 93500 PANTIN (FR)
(74) Mandataire: Brevalex
(86) Numéro de dépôt international: PCT/FR2022/051311
(87) Numéro de publication internationale: WO 2023/281187

(56) Documents cités:
- WO-A1-2009/053429
- JP-A- 2016 124 403
- US-A1- 2016 032 995

## Description

L'invention se rapporte à un dispositif pour relâcher rapidement un frein de stationnement électromécanique d'un véhicule.

De nombreux véhicules sont équipés de freins de stationnement dont la commande n'est pas manuelle, et notamment de freins électromécaniques. De tels freins sont munis d'un actionneur mécanique entraîné par un moteur électrique. Le conducteur du véhicule les commande typiquement en appuyant sur un bouton qui les fait basculer entre des états de serrage et des états de relâchement (« release »). Quand une commande de changement d'état est faite par le conducteur, une unité de contrôle moteur sensible à cette commande agit sur l'actionneur du frein d'après une stratégie prédéfinie. Et quand le frein est dépourvu d'un capteur qui permettrait de mesurer une force ou une pression de serrage, une stratégie usuelle de commande du relâchement du frein consiste à délivrer au moteur électrique une commande électrique dont la durée est suffisante pour garantir que le frein est complètement relâché à la fin de la commande, quels que soient l'état initial du frein et les circonstances du relâchement.

Mais cette durée de commande est excessive dans la plupart des situations, et ressentie comme importante par le conducteur.

L'objet de l'invention est ainsi de diminuer cette durée de relâchement quand cela est possible pour améliorer le confort d'utilisation du véhicule, en s'appuyant encore sur une stratégie (« release strategy ») de commande d'actionneur fondée sur une délivrance de commande électrique, tout en garantissant un relâchement complet du frein.

L'invention s'applique principalement, mais pas exclusivement, aux systèmes de freinage dont le freinage de service est assuré hydrauliquement alors que les freinages de stationnement et de secours sont assurés par le moteur électrique.

Le document US 2016/032399 A1 est relatif à un dispositif de frein de stationnement électromécanique pour un véhicule, comprenant un frein associé à une roue du véhicule, un actionneur du frein, un moteur électrique de déplacement de l'actionneur, et une unité de contrôle moteur du moteur électrique qui comprend :
- un module de fourniture de commandes au moteur électrique, dont des commandes de relâchement du frein ;
et où l'unité de contrôle moteur comprend encore :
- un module de mesure continue d'intensité du courant électrique fourni au moteur électrique durant les commandes de relâchement;
- un module de décision relié aux modules de mesure continue d'intensité du courant électrique et de fourniture de commandes, qui fonctionne, durant chacune des commandes de relâchement, en évaluant des valeurs successives de ladite intensité du courant électrique, en repérant une stabilisation de ladite intensité du courant électrique, et en arrêtant de fournir le courant électrique après avoir repéré la stabilisation.

Dans ce document, une course supplémentaire d'ouverture des patins est appliquée après la détection de la stabilisation du courant, afin de garantir un relâchement effectif du frein en toutes circonstances. Il apparaît toutefois que cette ouverture ne peut en général pas être obtenue avec exactitude, et qu'elle risque d'être inférieure à la valeur jugée nécessaire. Les inventeurs ont en effet constaté que la stabilisation du courant électrique, supposée coïncider avec le début du desserrage des patins, se produit souvent auparavant selon l'état du frein, et en particulier selon sa température et l'application possible d'un freinage hydraulique réalisé par le conducteur.

Les documents suivants US 2016/032995 A1, JP 2016 124403 et WO 2009/053429 A1 peuvent être de même cités en qualité d'art antérieur.

L'invention se distingue du document ci-dessus en ce que l'unité de contrôle, comme définie dans la revendication 1, comprend une sonde de température et une sonde de pression hydraulique faisant continuellement des mesures, respectivement, d'une température et d'une pression hydraulique représentatives d'une température et d'une pression hydraulique présentes dans le frein,
- le module de décision est relié à la sonde de température et à la sonde de pression hydraulique,
- et le module de décision est agencé pour déterminer une durée déterminée de prolongation de fourniture du courant électrique après que la stabilisation a été repérée, la durée déterminée dépendant des mesures de la sonde de température et de la sonde de pression hydraulique.

La durée de prolongation du desserrage est alors déterminée avec une précision permettant de garantir un relâchement suffisant, mais point excessif, du frein. Le procédé plus rudimentaire du document antérieur ne permet pas d'obtenir ce résultat, faute de prendre en compte l'état du frein au moment du relâchement.

La précision d'estimation de la durée de prolongation, nécessaire à un relâchement sûr, est encore accrue si la durée déterminée dépend aussi d'une valeur de stabilisation de l'intensité du courant électrique, obtenue durant la stabilisation.

En pratique, la durée de prolongation pourra être déterminée pour appliquer une course de fin de desserrage (ΔI) plus une course de sécurité de desserrage (I₂ + I₃) au frein, la course de fin de desserrage (ΔI) étant généralement obtenue par une fonction linéaire de la pression hydraulique, la course de sécurité de desserrage (I₂ + I₃) étant fixe.

Un autre aspect de l'invention est un dispositif de frein de stationnement, comme définie dans la revendication 8, électromécanique pour un véhicule, comprenant ledit frein, qui est associé à une roue du véhicule, un actionneur du frein, ledit moteur électrique de déplacement de l'actionneur, et l'unité de contrôle moteur du moteur électrique suivant ce qui précède.

Un autre aspect de l'invention est un véhicule automobile, comme définie dans la revendication 9, doté du dispositif de frein de stationnement conforme à ce qui précède.

Un autre aspect de l'invention est un procédé de commande, comme définie dans la revendication 10, d'un frein électromécanique de véhicule par des commandes de courant électrique de serrage et de relâchement du frein fournies à un moteur électrique de commande d'un actionneur du frein, comprenant des mesures continuelles de valeurs d'intensité du courant électrique pendant les commandes de relâchement d'une température représentative d'une température dans le frein et d'une pression hydraulique représentative d'une pression hydraulique dans le frein, et une interruption des commandes de relâchement après une durée déterminée dès qu'une stabilisation desdites valeurs est constatée, la durée déterminée dépendant des mesures de la température, de la pression hydraulique et d'une valeur de stabilisation du courant électrique.

D'après certaines caractéristiques optionnelles mais avantageuses de l'invention :
- l'unité de contrôle moteur est conçue pour calculer une dérivée temporelle de ladite intensité du courant électrique ;
- l'unité de contrôle moteur est conçue pour repérer la stabilisation en détectant un franchissement d'un seuil déterminé, par une fonction obtenue grâce au module de mesure ;
- la fonction est une valeur absolue de ladite dérivée temporelle ;
- la fonction est l'intensité du courant électrique.

L'invention sera maintenant décrite dans ses différents aspects, caractéristiques et avantages au moyen de la description détaillée des figures suivantes, qui en illustrent une réalisation particulière donnée à titre purement illustratif :
- la Figure 1 représente schématiquement un véhicule automobile ;
- la Figure 2 illustre un frein électromécanique en éclaté ;
- la Figure 3 illustre l'unité de contrôle moteur dudit frein ;
- la Figure 4 illustre les étapes de relâchement du frein ;
- la Figure 5 illustre une commande du courant électrique de commande du frein ;
- la Figure 6 illustre comment la durée du relâchement du frein est ajustée ;
- la Figure 7 est un diagramme du procédé ;
- et la Figure 8 illustre des fonctions de correction de la stratégie d'après l'état du frein.

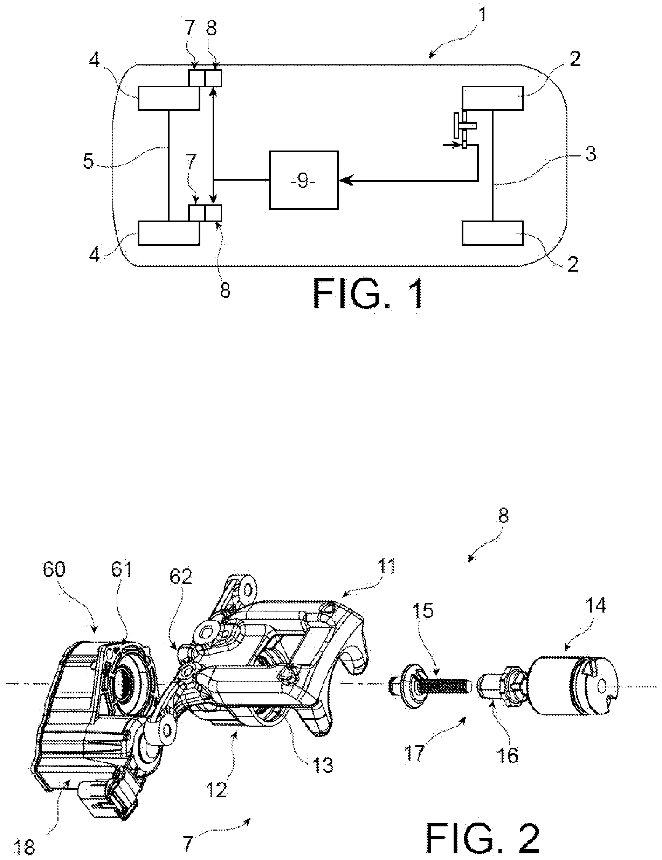

La figure 1 représente une automobile 1 équipée de deux roues avant 2 motrices et directrices sur un essieu avant 3, et de deux roues arrière 4 non motrices et non directrices sur un essieu arrière 5. Chacune des roues avant 2 est équipée d'un frein principal de service actionné directement par le conducteur, et chacune des roues arrière 4 est équipée d'un frein 7 décrit ci-après en détail, et qui est associé à un actionneur 8 apte à le faire travailler en frein de stationnement et de secours. Les actionneurs 8 des deux freins 7 sont pilotés par une même unité de contrôle moteur 9 d'après diverses informations relatives à certains paramètres du véhicule 1 et à son état de conduite. L'unité de contrôle moteur 9 est active quand un freinage de secours devient nécessaire ou qu'un stationnement est demandé.

La figure 2 illustre schématiquement une réalisation connue et non limitative du frein 7, d'après une représentation en éclaté. Le frein 7 comprend un étrier 11 uni à un boîtier 12 de forme cylindrique. Il comprend aussi un motoréducteur 60 dont une bride 61 est unie à une bride 62 à la face arrière du boîtier 12 par des vis (non représentées ici). Le motoréducteur 60 contient un moteur électrique 18 et des engrenages de réduction de la vitesse de rotation dudit moteur électrique 18. Le boîtier 12 comprend une cavité hydraulique 13 appelée cylindre, ouverte vers l'avant (à droite à la figure 2) et dans laquelle coulisse un piston 14 porteur d'un patin mobile (non représenté). Les freinages sont réalisés en faisant coulisser le piston 14 vers l'avant, pour rapprocher le patin mobile d'un patin fixe situé à l'extrémité avant de l'étrier 11 et enserrer un disque de la roue arrière 4 entre ces patins. Ce mouvement du piston 14 est obtenu, quand le frein 7 travaille en frein de service, par l'application d'une pression hydraulique dans la cavité hydraulique 13 pendant la conduite du véhicule : cette pression s'exerce sur la face arrière du piston 41 et le repousse vers l'avant. Si toutefois le frein 7 est commandé en frein de stationnement ou en frein de secours, les freinages sont réalisés par l'utilisation du moteur électrique 18 d'après des stratégies imposées par l'unité de contrôle moteur 9. Le moteur électrique 18 met en mouvement les engrenages du motoréducteur 60, ce qui fait tourner une vis 15 qui s'étend dans la cavité hydraulique 13. La vis 15 est en prise avec un écrou 16 sur lequel une face arrière du piston 14 est alors en butée. Les rotations de la vis 15 sont converties en translations de l'écrou 16 et du piston 14, qui se déplace en fonction de la durée d'actionnement du moteur électrique 18. L'actionneur 8 considéré ici comprend notamment le motoréducteur 60 et donc son moteur électrique 18, et le système 17 composé de la vis 15 et de l'écrou 16.

L'invention pourrait être mise en œuvre sur d'autres véhicules et d'autres freins que ceux-ci.

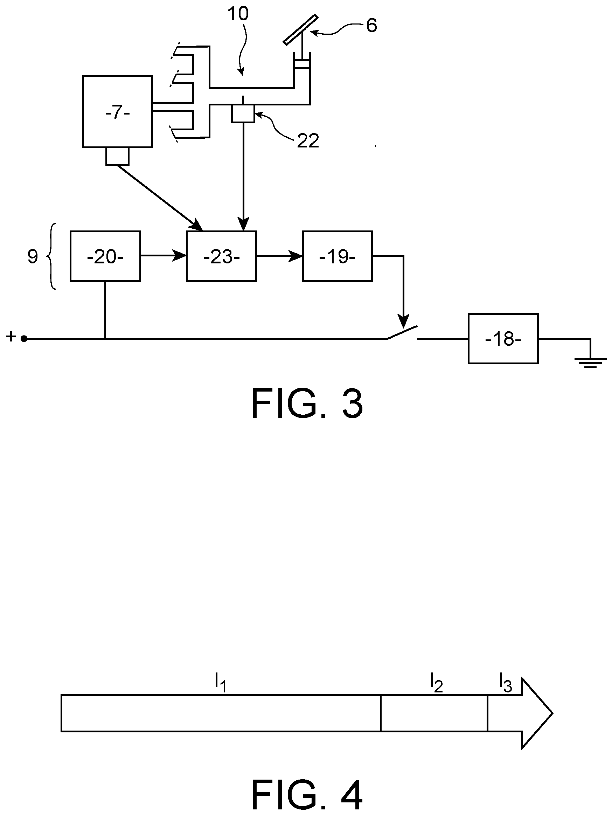

La figure 3 illustre plus en détail l'unité de contrôle moteur 9. Elle comprend : un module de fourniture de commandes 19 qui fournit des commandes au moteur électrique 18 en étant relié à une batterie ou une autre source d'énergie présente dans le véhicule 1 ; un module de mesure 20 ; et un module de décision 23 qui relie les modules de fourniture de commandes 19 et de mesure 20, et qui utilise le signal de sortie du module de mesure 20 pour ajuster la durée des commandes. Le module de mesure 20 et le module de décision 23 sont des caractéristiques de l'invention. Le module de mesure 20 mesure l'intensité du courant dans le circuit électrique sur lequel sont installés le moteur électrique 18 et ladite source d'énergie. Le dispositif comprend encore des moyens de mesure continuelle d'une température du frein 7 par une sonde de température 21, et d'une pression hydraulique 22. La sonde de température 21 est avantageusement placée au plus près d'un des patins de frein 7 afin d'atténuer au mieux leur température, et la sonde de pression hydraulique 22 peut mesurer directement la pression dans la cavité hydraulique 13 ou, comme on l'a représenté ici, estimer la pression hydraulique dans le frein 7 en mesurant la pression dans une autre portion du circuit hydraulique 10 soumis à l'action sur une pédale de frein 6, comme le maître-cylindre. Les sondes 21 et 22 de température et de pression hydraulique fournissent, comme le module de mesure 20, leurs mesures au module de décision 23.

La figure 4 est un diagramme qui illustre les étapes du relâchement du frein 7 à partir d'un état serré en fonction du mouvement de translation de l'écrou 16 du système vis-écrou 17, d'après la stratégie connue. On peut décomposer ce mouvement en trois déflexions : une première déflexion, de longueur l₁, correspond à la course utile du système vis-écrou 17 et est supposée aboutir au début du relâchement des portions ; une deuxième déflexion, de longueur l₂, doit être ajoutée bien qu'elle soit inutile théoriquement au relâchement du frein, mais elle correspond à une course à vide (« idle stroke ») du système vis-écrou 17 qui sert à dégager le disque enserré entre les patins du frein 7 ; et une troisième déflexion I₃ doit aussi être ajoutée pour garantir que la course à vide souhaitée soit effectivement obtenue malgré les incertitudes de construction et de fonctionnement du frein 7. D'après un exemple réel, les déflexions ont pour valeurs I₁=0,94mm, I₂=0,35mm et I₃=0,05mm respectivement, la déflexion totale étant alors égale à 1,34mm. Toutes ces déflexions sont invariables dans une stratégie connue. On voit que les déflexions I₂ et I₃ imposées pour des raisons de sécurité ou de bon fonctionnement ultérieur du frein 7 ont une part importante dans la déflexion totale ; il faut ajouter que la déflexion nécessaire au desserrage des patins du frein 7 est en réalité presque toujours inférieure à I₁, et qu'elle est souvent très inférieure, car I₁ est une valeur calculée à partir d'un serrage extrême du frein 7 qui n'est pas nécessairement présent au début du relâchement. Les commandes des procédés connus ont cependant, pour la plupart, une durée uniforme et calculée pour imposer cette déflexion totale (I₁+I₂+I₃).

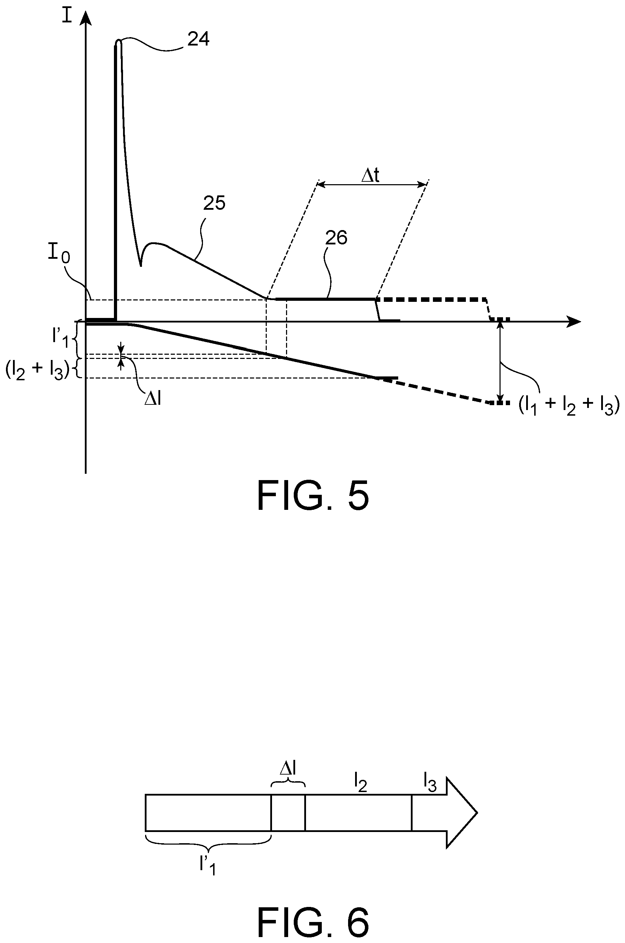

La forme expérimentale d'une commande électrique de relâchement du frein 7 à partir d'un état serré est représentée à la partie supérieure de la figure 5, qui représente l'intensité I du courant passant par le circuit électrique comprenant le moteur électrique 18 en fonction du temps t ; la partie inférieure de cette figure 5 représente la déflexion correspondante obtenue pour l'actionneur 8. La commande comprend successivement un pic de démarrage 24, une portion en décroissance 25 et une portion plate 26 où le courant est uniforme à une basse intensité (« idle current »). Le pic de démarrage 24 à haute intensité du courant correspond à un état transitoire principalement dû aux rattrapages de jeu dans les mécanismes, la portion en décroissance 25 correspond au relâchement progressif du frein 7, et la portion plate 26 à une course à effort résiduel, ou course à vide de l'actionneur 8 quand le frein 7 est complètement relâché. Dans la portion en décroissance 25 et la portion plate 26, l'intensité I est proportionnelle à l'effort appliqué par le moteur électrique 18 et qui est nécessaire pour déplacer l'actionneur 8.

D'après l'invention, la déflexion totale de l'actionneur du frein 7 (ou la translation de l'écrou 16) au cours d'un relâchement doit devenir égale à (I₁'+I₂+I₃) (figure 6), où I₁' correspond à la déflexion strictement nécessaire au desserrage des patins, et donc I₁' ≤ I₁, alors que I₂ et I₃ restent inchangés. Il faut souligner que I'₁ peut être de beaucoup inférieur à I₁, par exemple voisin de 0,6mm dans l'exemple mentionné.

On y parvient en ajoutant le module de mesure 20, qui mesure l'intensité I du courant fourni au moteur électrique 18 et dont le signal de sortie, fourni au module de décision 23, est une fonction conforme à la figure 5. Quand la portion plate 26 est atteinte, le module de décision 23 calcule une durée de prolongation Δt d'application du courant permettant d'accomplir seulement la course totale nécessaire (I'₁ + I₂ + I₃). La détection de la portion plate 26 revient à une détection de stabilisation du courant électrique. Le critère de détection peut avantageusement être le franchissement vers zéro d'un seuil déterminé par la valeur absolue de la dérivée temporelle de l'intensité I du courant (dl/dt) ; d'autres critères de stabilisation pourraient être envisagés, comme le franchissement vers zéro d'un seuil de la valeur de l'intensité I du courant électrique.

La figure 5 illustre encore, en pointillés, les effets de la stratégie connue : la commande électrique se prolonge après Δt, de même que la course à vide, de manière à obtenir finalement la déflexion (I₁+I₂+I₃).

Le mode de détermination de la durée de prolongation Δt est un aspect essentiel de l'invention, et il sera détaillé ci-dessous : la stabilisation du courant électrique à une valeur de stabilisation I₀ ne coïncide en réalité, généralement, pas avec le commencement du desserrage des patins.

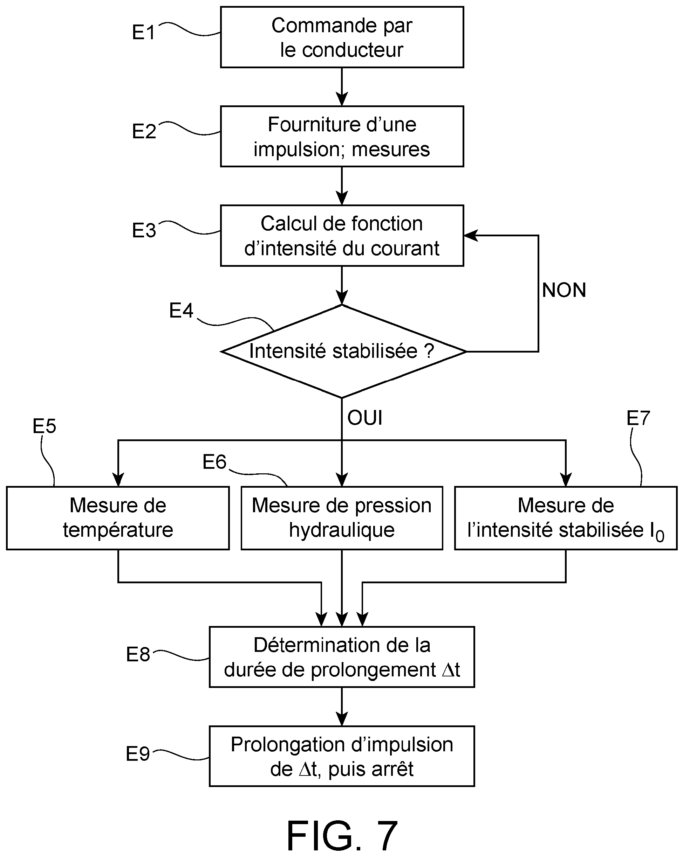

La figure 7 illustre les étapes principales du procédé. L'étape E1 consiste en l'application d'une commande de relâchement du frein par le conducteur. À l'étape E2, l'unité de contrôle moteur 9 devient active, le module de fourniture de commandes 19 fournit une commande au moteur électrique 18, et le module de mesure 20 commence à mesurer l'intensité I du courant de la commande. L'unité de décision 23 observe continuellement l'évolution de l'intensité I, ou d'une fonction temporelle qui lui est corrélée et qu'elle calcule, à l'étape E3. Si elle conclut que cette fonction s'est stabilisée (étape E4), notamment si la fonction franchit un seuil déterminé (par exemple dl/dt < 5 A/s), elle ordonne que la commande électrique soit prolongée seulement pendant une durée Δt déterminée et que la commande s'arrête ensuite (étape E9) ; sinon, le programme revient à l'étape E3.

Voici comment la durée de prolongation Δt est estimée au cours d'étapes E5, E6, E7 et E8 se déroulant entre les étapes E4 et E9, simultanément ou successivement pour E5, E6 et E7 :
- la température θ dans le frein 7 est mesurée au moyen de la sonde de température 21 (étape E5) ;
- la pression hydraulique P dans le frein 7 est mesurée au moyen de la sonde de pression hydraulique 22 (étape E6) ;
- et la valeur de stabilisation I₀ du courant électrique est aussi mesurée (étape E7).

Comme on l'a déjà mentionné, les mesures de température et de pression peuvent être faites directement dans le frein 7, ou au voisinage de celui-ci, et faire alors éventuellement l'objet de corrections. En variante, en E5 on estime la valeur de la température θ.

Les inventeurs ont constaté que la stabilisation du courant électrique du moteur électrique 18 arrivait en réalité un peu avant le desserrage effectif des patins quand le frein 7 était chaud, ou qu'une pression hydraulique lui était appliquée par un appui du conducteur sur la pédale de frein 6. Cela signifie que la déflexion I'₁ n'est pas achevée à l'instant de stabilisation du courant électrique (au début de la portion plate 26) dans ces circonstances, et qu'il faut encore appliquer, en plus des courses de sécurité I₂ et I₃, une course de fin de desserrage ΔI, qu'il est possible de connaître à l'avance par des essais préalables sur le frein 7 et des mesures de la température θ et de la pression hydraulique P. En d'autres termes, la durée de prolongation Δt du fonctionnement du moteur électrique 18 après la stabilisation de son courant d'alimentation devient adaptative ou variable dans l'invention, ainsi que la course correspondante d'écartement des patins du frein 7, afin de maintenir la course de sécurité (I₂+I₃) après le desserrage des patins à une valeur invariable.

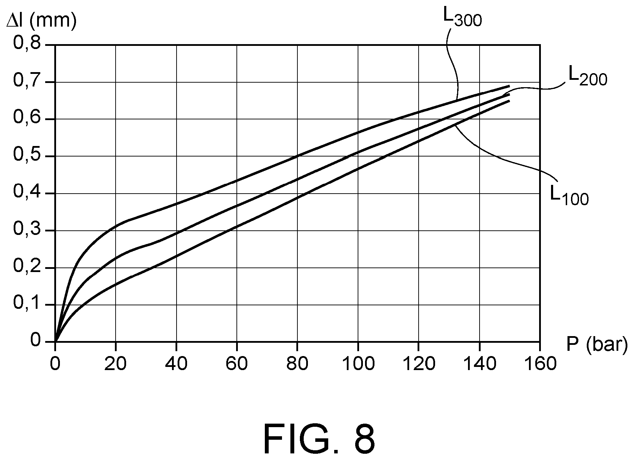

Le module de décision 23 contient donc des fonctions telles que celles de la figure 8, qui expriment la course de fin de desserrage ΔI en fonction de la pression hydraulique P et de la température θ (ici L₁₀₀, L₂₀₀ et L₃₀₀ pour des températures de 100°C, 200°C et 300°C respectivement pour le frein 7). La pression hydraulique P est exprimée en bars, et la course de fin de desserrage ΔI en millimètres. Ces fonctions sont, à température égale, approximativement linéaires (ΔI = a P + b, où a et b sont de coefficients fixes) dès qu'un freinage modéré est appliqué, et tendent vers zéro l'absence de freinage (ΔI ≈ 0 pour P ≈ 0).

Enfin, la durée de prolongation Δt dépend en général non seulement de la fin de course (ΔI + I₂ + I₃) à appliquer, mais de la vitesse de rotation du moteur électrique 18 quand la valeur de stabilisation I₀ a été atteinte. Cette vitesse en fonction de l'intensité peut aussi être déterminée par des essais préliminaires.

L'invention permet donc une durée plus courte des relâchements (environ un tiers de moins qu'avec les procédés connus, dans des conditions ordinaires), une économie du matériel et de l'énergie consommée, et aussi des resserrages plus rapides du frein grâce au raccourcissement de la course à vide, ce qui est très apprécié si le frein de stationnement doit aussi servir de frein supplétif dans certaines circonstances d'urgence pendant la conduite : celle-ci devient plus sûre.

### Nomenclature

1 Automobile
2 Roues avant
3 Essieu avant
4 Roues arrière
5 Essieu arrière
6 Pédale de frein
7 Frein
8 Actionneur
9 Unité de contrôle moteur
10 Circuit hydraulique
11 Étrier
12 Boîtier
13 Cavité hydraulique
14 Piston
15 Vis
16 Écrou
17 Système vis-écrou
18 Moteur électrique
19 Module de fourniture de commandes
21 Sonde de température
22 Sonde de pression hydraulique
20 Module de mesure
23 Module de décision
24 Pic de démarrage
25 Portion en décroissance
26 Portion plate
60 Motoréducteur
61 Bride
62 Bride
I Intensité du courant électrique
I₀ Valeur de stabilisation du courant électrique
t Temps
dl/dt Dérivée de l'intensité
I1 Déflexion imposée de relâchement du frein
I1' Déflexion utile de relâchement du frein
I2 Première déflexion additionnelle de l'actionneur
I3 Deuxième déflexion additionnelle de l'actionneur
ΔI Fin de course de desserrage des patins
θ Température
P Pression hydraulique
Δt Durée de prolongation de commande de courant
E1 Commande du conducteur
E2 Fourniture de commande et mesure d'intensité
E3 Fonction d'évolution de l'intensité
E4 Stabilisation
E5 Mesure de température
E6 Mesure de pression hydraulique
E7 Mesure de l'intensité stabilisée
E8 Détermination de la durée de prolongation
E9 Prolongation déterminée puis arrêt de la commande
L₁₀₀, L₂₀₀, L₃₀₀ Fonctions de fin de course de desserrage

## Revendications

1. Unité de contrôle moteur (9) destinée à commander un moteur électrique (18) d'actionneur de frein (7) électromécanique de véhicule (1), qui comprend :
- un module de fourniture de commandes (19) d'un courant électrique au moteur électrique (18), dont des commandes de relâchement du frein (7) ;
- un module de mesure (20) continue d'intensité (I) du courant électrique fourni au moteur électrique durant les commandes de relâchement;
- un module de décision (23) relié aux modules de mesure (20) continue d'intensité du courant électrique et de fourniture de commandes (19), qui est conçu, durant chacune des commandes de relâchement, pour évaluer des valeurs successives de ladite intensité du courant électrique, repérer une stabilisation de ladite intensité du courant électrique, et arrêter de fournir le courant électrique après avoir repéré la stabilisation,
- l'unité de contrôle étant **caractérisée en ce qu'**elle comprend une sonde de température (21) et une sonde de pression hydraulique (22) faisant continuellement des mesures, respectivement, d'une température et d'une pression hydraulique représentatives d'une température (θ) et d'une pression hydraulique (P) présentes dans le frein (7),
- le module de décision (23) est relié à la sonde de température (21) et à la sonde de pression hydraulique (22),
- et le module de décision est agencé pour déterminer une durée déterminée (Δt) de prolongation de fourniture du courant électrique après que la stabilisation a été repérée, la durée déterminée (Δt) dépendant des mesures de la sonde de température (21) et de la sonde de pression hydraulique (22).

2. Unité de contrôle moteur selon la revendication 1, **caractérisée en ce que** la durée déterminée (Δt) dépend aussi d'une valeur de stabilisation (I₀) de l'intensité du courant électrique, obtenue durant la stabilisation.

3. Unité de contrôle moteur selon la revendication 1 ou 2, **caractérisée en ce que** la durée déterminée (Δt) est déterminée pour appliquer une course de fin de desserrage (ΔI) plus une course de sécurité de desserrage (I₂ + I₃) au frein, la course de fin de desserrage (ΔI) étant obtenue par une fonction généralement linéaire (L₁₀₀, L₂₀₀, L₃₀₀) de la pression hydraulique (P), la course de sécurité de desserrage (I₂ + I₃) étant fixe.

4. Unité de contrôle moteur suivant l'une quelconque des revendications 1 à 3, **caractérisée en ce qu'**elle est conçue pour calculer une dérivée temporelle de ladite intensité du courant électrique.

5. Unité de contrôle moteur suivant l'une quelconque des revendications 1 à 4, **caractérisée en ce qu'**elle est conçue pour repérer la stabilisation en détectant un franchissement d'un seuil déterminé, par une fonction d'intensité du courant électrique obtenue grâce au module de mesure.

6. Unité de contrôle moteur suivant les revendications 4 et 5, **caractérisée en ce que** la fonction d'intensité du courant électrique est une valeur absolue de ladite dérivée temporelle.

7. Unité de contrôle moteur suivant la revendication 5, **caractérisée en ce que** la fonction d'intensité du courant électrique est l'intensité du courant électrique.

8. Dispositif de frein de stationnement électromécanique pour un véhicule, comprenant ledit frein (7), qui est associé à une roue (4) du véhicule, un actionneur (8) du frein, ledit moteur électrique (18) de déplacement de l'actionneur, et l'unité de contrôle moteur (9) du moteur électrique suivant l'une quelconque des revendications précédentes.

9. Véhicule automobile, **caractérisé en ce qu'**il comprend un dispositif de frein de stationnement conforme à la revendication 8.

10. Procédé de commande d'un frein électromécanique de véhicule par des commandes de courant électrique de serrage et de relâchement du frein fournies à un moteur électrique de commande d'un actionneur du frein, comprenant des mesures continuelles de valeurs d'intensité du courant électrique pendant les commandes de relâchement d'une température représentative d'une température (θ) dans le frein et d'une pression hydraulique représentative d'une pression hydraulique (P) dans le frein, et une interruption des commandes de relâchement après une durée déterminée (Δt) dès qu'une stabilisation desdites valeurs est constatée, la durée déterminée (Δt) dépendant des mesures de la température, de la pression hydraulique et d'une valeur de stabilisation (I₀) du courant électrique.

## Patentansprüche

1. Motorsteuereinheit (9) zur Steuerung eines Elektromotors (18) für ein elektromechanisches Bremsstellglied (7) eines Fahrzeugs (1), umfassend:
- ein Modul zur Bereitstellung von Befehlen (19) für einen elektrischen Strom an den Elektromotor (18), darunter Befehle zum Lösen der Bremse (7);
- ein Modul (20) zur kontinuierlichen Messung der Stärke (I) des elektrischen Stroms, der dem Elektromotor während der Lösebefehle zugeführt wird;
- ein Entscheidungsmodul (23), das mit den Modulen (20) zur kontinuierlichen Messung der Stärke des elektrischen Stroms und zur Bereitstellung von Befehlen (19) verbunden ist und das während jeder der Lösebefehle so ausgelegt ist, dass es aufeinanderfolgende Werte der Stärke des elektrischen Stroms auswertet, eine Stabilisierung der Stärke des elektrischen Stroms feststellt und die Bereitstellung des elektrischen Stroms stoppt, nachdem die Stabilisierung festgestellt wurde,
- wobei die Steuereinheit **dadurch gekennzeichnet ist, dass** sie einen Temperatursensor (21) und einen Hydraulikdrucksensor (22) umfasst, die kontinuierlich Messungen jeweils einer Temperatur und eines Hydraulikdrucks vornehmen, die repräsentativ für eine Temperatur (0) und einen Hydraulikdruck (P) in der Bremse (7) sind,
- das Entscheidungsmodul (23) mit dem Temperatursensor (21) und dem Hydraulikdrucksensor (22) verbunden ist,
- und das Entscheidungsmodul so angeordnet ist, dass es eine bestimmte Dauer (Δt) der Verlängerung der Bereitstellung des elektrischen Stroms bestimmt, nachdem die Stabilisierung festgestellt wurde, wobei die bestimmte Dauer (Δt) von den Messungen des Temperatursensors (21) und des Hydraulikdrucksensors (22) abhängt.

2. Motorsteuereinheit nach Anspruch 1, **dadurch gekennzeichnet, dass** die bestimmte Dauer (Δt) auch von einem Wert der Stabilisierung (I₀) der Stärke des elektrischen Stroms abhängt, der während der Stabilisierung erhalten wird.

3. Motorsteuereinheit nach Anspruch 1 oder 2, **dadurch gekennzeichnet, dass** die bestimmte Dauer (Δt) bestimmt wird, um einen Endlösehub (ΔI) plus einen Sicherheitslösehub (I₂ + I₃) auf die Bremse anzuwenden, wobei der Endlösehub (ΔI) durch eine allgemein lineare Funktion (L₁₀₀, L₂₀₀, L₃₀₀) des Hydraulikdrucks (P) erreicht wird, wobei der Sicherheitslösehub (I₂ + I₃) feststehend ist.

4. Motorsteuereinheit nach einem der Ansprüche 1 bis 3, **dadurch gekennzeichnet, dass** sie so ausgelegt ist, dass sie eine zeitliche Ableitung der Stärke des elektrischen Stroms berechnet.

5. Motorsteuereinheit nach einem der Ansprüche 1 bis 4, **dadurch gekennzeichnet, dass** sie so ausgelegt ist, dass sie die Stabilisierung dadurch feststellt, dass sie eine Überschreitung eines bestimmten Schwellenwerts durch eine Funktion der Stärke des elektrischen Stroms erkennt, die durch das Messmodul erhalten wird.

6. Motorsteuereinheit nach den Ansprüchen 4 und 5, **dadurch gekennzeichnet, dass** die Funktion der Stärke des elektrischen Stroms ein absoluter Wert der zeitlichen Ableitung ist.

7. Motorsteuereinheit nach Anspruch 5, **dadurch gekennzeichnet, dass** die Funktion der Stärke des elektrischen Stroms die Stärke des elektrischen Stroms ist.

8. Elektromechanische Feststellbremsvorrichtung für ein Fahrzeug, umfassend die Bremse (7), die mit einem Rad (4) des Fahrzeugs verbunden ist, ein Stellglied (8) der Bremse, den Elektromotor (18) zur Bewegung des Stellglieds und die Motorsteuereinheit (9) des Elektromotors nach einem der vorhergehenden Ansprüche.

9. Kraftfahrzeug, **dadurch gekennzeichnet, dass** es eine Feststellbremsvorrichtung nach Anspruch 8 umfasst.

10. Verfahren zur Steuerung einer elektromechanischen Fahrzeugbremse durch elektrische Befehle zum Betätigen und Lösen der Bremse, die einem Elektromotor zur Steuerung eines Bremsstellglieds bereitgestellt werden, umfassend kontinuierliche Messungen von Werten der Stärke des elektrischen Stroms während der Lösebefehle einer Temperatur, die für eine Temperatur (θ) in der Bremse repräsentativ ist, und eines Hydraulikdrucks, der für einen Hydraulikdruck (P) in der Bremse repräsentativ ist, und eine Unterbrechung der Lösebefehle nach einer bestimmten Dauer (Δt), sobald eine Stabilisierung der Werte festgestellt wird, wobei die bestimmte Dauer (Δt) von den Messungen der Temperatur, des Hydraulikdrucks und eines Werts der Stabilisierung (I₀) des elektrischen Stroms abhängt.

## Claims

1. Motor control unit (9) intended to control an electric motor (18) of an electromechanical actuator of a brake (7) of a vehicle (1), which comprises:
- a module (19) supplying commands of an electric current to the electric motor (18), including commands to release the brake (7);
- a module (20) for continuous measurement of the intensity (I) of the electric current supplied to the electric motor during the release commands;
- a decision module (23) connected to the modules for continuously measuring the intensity of the electric current (20) and for supplying commands (19), which is designed, during each of the release commands, to evaluate successive values of said intensity of the electric current, to note a stabilisation of said intensity of the electric current, and to stop supplying the electric current after having noted the stabilisation,
- the control unit being **characterised in that** it comprises a temperature sensor (21) and a hydraulic-pressure sensor (22) continuously making measurements, respectively, of a temperature and of a hydraulic pressure representing a temperature (θ) and a hydraulic pressure (P) present in the brake (7),
- the decision module (23) is connected to the temperature sensor (21) and to the hydraulic-pressure sensor (22),
- and the decision module is arranged to determine a given duration (Δt) of prolongation of supply of the electric current after the stabilisation has been noted, the given duration (Δt) being dependent on the measurements of the temperature sensor (21) and of the hydraulic-pressure sensor (22).

2. Motor control unit according to claim 1, **characterised in that** the given duration (Δt) also depends on a degree of stabilisation (I₀) of the intensity of the electric current, obtained during stabilisation.

3. Motor control unit according to claim 1 or 2, **characterised in that** the given duration (Δt) is determined for applying an end-of-release travel (ΔI) plus a safety release travel (I₂ + I₃) to the brake, the end-of-release travel (ΔI) being obtained by a linear function (L₁₀₀, L₂₀₀, L₃₀₀) of the hydraulic pressure (P), the safety release travel (I₂ + I₃) being fixed.

4. Motor control unit according to any one of claims 1 to 3, **characterised in that** it is designed to calculate a temporal drift of said intensity of the electric current.

5. Motor control unit according to any one of claims 1 to 4, **characterised in that** it is designed to note the stabilisation by detecting that a given threshold has been crossed, by a function of intensity of the electric current obtained by means of the measuring module.

6. Motor control unit according to claims 4 and 5, **characterised in that** the function of intensity of the electric current is an absolute value of said temporal drift.

7. Motor control unit according to claim 5, **characterised in that** the function of intensity of the electric current is the intensity of the electric current.

8. Electromechanical parking brake device for a vehicle, comprising said brake (7), which is associated with a wheel (4) of the vehicle, an actuator (8) of the brake, said electric motor (18) for moving the actuator, and the motor control unit (9) of the electric motor in accordance with any one of the preceding claims.

9. Motor vehicle, **characterised in that** it comprises a parking brake device according to claim 8.

10. Method for controlling an electromechanical vehicle brake by electric-current commands for clamping and releasing the brake supplied to an electric motor controlling an actuator of the brake, comprising continuous measurements of intensity values of the electric current during the release commands, of a temperature representing a temperature (θ) in the brake and of a hydraulic pressure representing a hydraulic pressure (P) in the brake, and an interruption of the release commands after a given duration (Δt) as soon as a stabilisation of said values is noted, the given duration (Δt) being dependent on the measurements of the temperature, of the hydraulic pressure and of an electric-current stabilisation value (I₀).
